# EUROPÄISCHE PATENTSCHRIFT

(11) **EP 4 137 364 B1**
(45) Veröffentlichungstag und Bekanntmachung des Hinweises auf die Patenterteilung: **24.07.2024**
(21) Anmeldenummer: 21191973.3
(22) Anmeldetag: 18.08.2021
(51) Int. Cl.: B60R 1/078

(54) **NOTFALLSPIEGEL ZUR LÖSBAREN MONTAGE AN EINEM KRAFTFAHRZEUG**
EMERGENCY MIRROR FOR DETACHABLE MOUNTING ON A MOTOR VEHICLE
MIROIR DE SECOURS DESTINÉ AU MONTAGE AMOVIBLE SUR UN VÉHICULE AUTOMOBILE

(43) Veröffentlichungstag der Anmeldung: 22.02.2023
(73) Patentinhaber: Stockhaus, Walter, 67473 Lindenberg (DE); Merk, Gerald, 67473 Lindenberg (DE)
(72) Erfinder: Stockhaus, Walter, 67473 Lindenberg (DE)
(74) Vertreter: Baier, Martin

(56) Entgegenhaltungen:
- DE-A1- 3 001 846
- IT-A1- 201900 002 989
- NL-C2- 1 003 942
- US-A- 2 898 070
- US-A- 4 158 451

## Beschreibung

Die vorliegende Erfindung betrifft einen Notfallspiegel zur lösbaren Montage an einem Kraftfahrzeug umfassend eine Spiegelfläche, die in einem Spiegelgehäuse angeordnet ist, wobei mit dem Spiegelgehäuse mindestens drei Verbindungselemente verbunden sind, von denen mindestens ein Verbindungselement längenveränderlich ist, wobei an den dem Spiegelgehäuse abgewandten Enden der Verbindungselemente jeweils ein Halterungselement angeordnet ist, wobei die Halterungselemente jeweils dafür vorgesehen sind, mit einem Teil einer Tür eines Kraftfahrzeugs eine lösbare Verbindung einzugehen.

Kraftfahrzeuge weisen üblicherweise mindestens einen Außen- bzw. Seitenspiegel auf, um ein sicheres Führen des Fahrzeugs zu gewährleisten, dadurch, dass die Beobachtung der rückwärtigen Verkehrsvorgänge erleichtert wird. Solche Außenspiegel stehen üblicherweise jeweils links und rechts vom Fahrzeug nach außen, wobei sie sich im Blickfeld des Fahrers befinden und ihre Position so verstellbar ist, dass sie dem Fahrer eine optimale Sicht auf das rückwärtige Verkehrsgeschehen ermöglichen. Kraftfahrzeuge sowie Außen- bzw. Seitenspiegel als solche sind dem Fachmann bekannt.

Mittlerweile werden anstelle von traditionellen Spiegeln insbesondere bei Lastkraftwagen auch sogenannte elektronische oder digitale Außen- bzw. Seitenspiegel verwendet, bei denen die Bilder einer Kamera anstelle eines Spiegels über ein Display im Inneren des Fahrzeugs wiedergegen werden. Solche elektronischen Rückspiegel sind dem Fachmann bekannt.

Da das Vorhandensein eines Außen- bzw. Seitenspiegels oder digitaler Außen- bzw. Seitenspiegel auf der Fahrerseite zwingend erforderlich ist und üblicherweise auch das Vorhandensein eines solchen Spiegels auf der Beifahrerseite, darf ein Fahrzeug mit beschädigtem Außen- bzw. Seitenspiegel oder beschädigtem digitalem Außen- bzw. Seitenspiegel nicht auf öffentlichen Straßen am Verkehrsgeschehen teilnehmen. Somit müssen Fahrzeuge, deren Außen- bzw. Seitenspiegel oder digitale Außen- bzw. Seitenspiegel während einer Fahrt beschädigt werden, kostspielig abgeschleppt werden. Dies gilt insbesondere für Lastkraftwagen, die zukünftig nur noch über digitale Außenspiegel verfügen.

Die der vorliegenden Erfindung zugrunde liegende Aufgabe ist daher die Bereitstellung eines neuen Notfallspiegels, welcher einen beschädigten Außen- bzw. Seitenspiegel oder einen digitale Außen- bzw. Seitenspiegel zur Ermöglichung einer Weiterfahrt kurzzeitig ersetzen kann.

Gelöst wird diese Aufgabe durch einen Notfallspiegel nach Anspruch 1.

Der Notfallspiegel zur lösbaren Montage eignet sich zur Verwendung an einem beliebigen Kraftfahrzeug, beispielsweise einem Lastkraftwagen oder einem Personenkraftfahrzeug, ohne die Verwendung auf diese genannten Kraftfahrzeuge zu beschränken. Für die Anwendung des Notfallspiegels ist es unerheblich, auf welche Art das Kraftfahrzeug angetrieben wird. So eignet sich der Notfallspiegel zur Anwendung an Kraftfahrzeugen mit Verbrennungsmotor, beispielsweise für Diesel, Benzin oder Erdgas, aber auch für Kraftfahrzeuge mit Elektro-Antrieb oder Brennstoffzellenantrieb, ohne die Erfindung auf eine spezielle Antriebsform des Kraftfahrzeugs einzuschränken. Verschiedene Antriebsformen von Kraftfahrzeugen sind dem Fachmann bekannt.

Das Dokument DE3001846 A1 offenbart einen Notfallspiegel nach dem Oberbegriff von Anspruch 1.

Ein erster Vorteil des erfindungsgemäßen Notfallspiegels ist darin zu sehen, dass eine Weiterfahrt auch nach einer Beschädigung eines Außen- bzw. Seitenspiegels oder digitalen Außen- bzw. Seitenspiegels eines Kraftfahrzeugs kurzzeitig möglich ist, bis eine Möglichkeit zur Reparatur oder zum Ersetzen des beschädigten Außen- bzw. Seitenspiegels oder digitalen Außen- bzw. Seitenspiegels besteht. Im Rahmen der vorliegenden Erfindung hat eine kurzfristige Weiterfahrt (sofern nachfolgend nicht anders definiert) die folgende Bedeutung: eine Weiterfahrt für mehrere Minuten, Stunden, oder Tage beziehungsweise zum Zurücklegen einiger hundert Meter bis zu einiger hundert Kilometer. Sofern im Rahmen der vorliegenden Erfindung konkrete Zahlenwerte für einen Abstand angegeben werden, beziehen sich die jeweiligen Abstandsangaben auf die Luftlinie.

Ein wesentlicher Vorteil ist somit, dass ein kostspieliges Abschleppen des Kraftfahrzeugs, gegebenenfalls verbunden mit einer kostspieligen und zeitintensiven Weiterreise der Insassen mit einem anderen Kraftfahrzeug oder einem anderen Verkehrsmittel, wie beispielsweise der Bahn, vermieden werden kann.

Ein weiterer Vorteil des erfindungsgemäßen Notfallspiegels ist weiterhin, dass vermieden werden kann, dass eine Ladung, beispielsweise eine Ladung eines Lastkraftwagens, verspätet am Ziel eintrifft oder gar unbrauchbar wird, wenn es sich bei der Ladung um verderbliche Güter handelt. Solche Güter, welche mit Kraftfahrzeugen, insbesondere Lastkraftwagen, befördert werden können, sind dem Fachmann bekannt.

Des Weiteren erlaubt der erfindungsgemäße Notfallspiegel, dass der Fahrer eines Kraftfahrzeugs eine Werkstatt seiner Wahl zur Reparatur oder zum Ersetzen des beschädigten Außen- bzw. Seitenspiegels oder digitaler Außen- bzw. Seitenspiegel auswählen kann und nicht gezwungen ist, eine Werkstatt zu wählen, welche durch den Abschleppdienst beziehungsweise die örtlichen Gegebenheiten vorgegeben wird.

Ein weiterer Vorteil des erfindungsgemäßen Notfallspiegels ist, dass dieser sich einfach und platzsparend in einem Kraftfahrzeug mitführen lässt.

Nachfolgend wird der erfindungsgemäße Notfallspiegel zur lösbaren Montage an einem Kraftfahrzeug näher erläutert.

Der erste Gegenstand der vorliegenden Erfindung betrifft einen Notfallspiegel (01) zur lösbaren Montage an einem Kraftfahrzeug umfassend eine Spiegelfläche (02), die in einem Spiegelgehäuse (03) angeordnet ist, wobei mit dem Spiegelgehäuse (03) mindestens drei Verbindungselemente (04, 05, 06) verbunden sind, wobei mindestens ein Verbindungselement (04, 05, 06) längenveränderlich ist, wobei an den dem Spiegelgehäuse (03) abgewandten Enden der Verbindungselemente (04, 05, 06) jeweils ein Halterungselement (07, 08, 09) angeordnet ist, wobei die Halterungselemente (07, 08, 09) jeweils dafür vorgesehen sind, mit einem Teil einer Tür eines Kraftfahrzeugs eine lösbare Verbindung einzugehen.

Als Spiegelgehäuse eignet sich prinzipiell jede beliebige dem Fachmann bekannte Vorrichtung, welche dazu geeignet ist, eine Spiegelfläche zu halten und an welcher sich Verbindungselemente anbringen lassen. Als Verbindungselement eignet sich prinzipiell jedes dem Fachmann bekannte Verbindungselement, welches dazu geeignet ist, an einem Spiegelgehäuse befestigt zu werden und mit Halterungselementen ausgestattet zu sein. Als längenveränderliches Verbindungselement eignet sich prinzipiell jedes beliebige dem Fachmann bekannte Verbindungselement, welches längenveränderlich ist und dazu geeignet ist, an einem Spiegelgehäuse befestigt zu werden und mit Halterungselementen ausgestattet zu sein. Als Halterungselemente eignen sich prinzipiell alle dem Fachmann bekannten Halterungselemente, welche dafür geeignet sind, mit einem Teil einer Tür eines Kraftfahrzeugs eine lösbare Verbindung einzugehen.

Im Rahmen der vorliegenden Erfindung ist es bevorzugt, dass mindestens zwei der drei Verbindungselemente (04, 05, 06) des Notfallspiegels längenveränderlich sind.

Weiterhin ist es im Rahmen der vorliegenden Erfindung bevorzugt, alle drei Verbindungselemente (04, 05, 06) längenveränderlich sind.

Zur Befestigung des Notfallspiegels an einer Tür eines Kraftfahrzeugs ist vorzugsweise das erste Halterungselement (07) als Saugnapfhalterung ausgestaltet, das zweite Halterungselement (08) ebenfalls als Saugnapfhalterung ausgestaltet und das dritte Halterungselement (09) als eine U-Profil-Halterung ausgestaltet.

Weiterhin ist es bevorzugt, dass die Halterungselemente (07) und (08) als Saugnapfhalterungen ausgestaltet sind und dafür vorgesehen sind, wiederlösbare kraftschlüssige Verbindungen mit der Fensterscheibe einer Tür eines Kraftfahrzeugs eingehen können.

Kraftschlüssige Verbindungen als solche sind dem Fachmann bekannt.

Weiterhin ist bevorzugt, dass das Halterungselement (09) als U-Profil-Halterung ausgestaltet ist und dafür vorgesehen ist, eine wiederlösbare formschlüssige Verbindung zwischen der A-Säule eines Kraftfahrzeugs und einer Tür eines Kraftfahrzeugs einzugehen.

Formschlüssige Verbindungen als solche sind dem Fachmann bekannt.

Eine weitere bevorzugte Ausführungsform der vorliegenden Erfindung enthält als Verbindungselemente (04, 05, 06) solche, die mittels Kugelgelenk mindestens um 150° schwenkbar sind.

Solche Kugelgelenke sind dem Fachmann prinzipiell bekannt. Dies Ausführungsform ermöglich es, dass ein Notfallspiegel sich sowohl zum Anbringen an der Fahrerseite wie auch an der Beifahrerseite eines Kraftfahrzeugs eignet.

In einer weiteren bevorzugten Ausführungsform umfasst das Spiegelgehäuse (03) eine digitale Weitwinkel-Kamera (10) mit Sendeeinheit, wobei die Linse der Kamera in dieselbe Richtung wie die Spiegelfläche gerichtet ist.

Es eignet sich prinzipiell jede beliebige dem Fachmann bekannte Kamera mit Sendeeinheit. Es versteht sich von selbst, dass die Linse der Kamera so ausgerichtet ist, dass damit das Beobachten des rückwärtigen Verkehrs möglich ist. Ein besonderer Vorteil dieser Ausführungsform ist, dass es möglich ist, zusätzlich zu einer konventionellen Spiegelfläche eine Kamera zu nutzen, welche ebenfalls den Weitwinkel umfasst. Der Weitwinkel im Rahmen der Beobachtung von rückwärtigem Verkehr aus einem Kraftfahrzeug heraus ist dem Fachmann als solcher bekannt. Ein weiterer Vorteil dieser Ausführungsform ist, dass es dem Fahrer möglich ist, den rückwärtigen Verkehr auf einem Display mit Empfangseinheit im Inneren des Kraftfahrzeugs zu beobachten.

Eine weitere bevorzugte Ausführungsform umfasst eine Spiegelfläche (02) und ein Spiegelgehäuse (03), welche eine im Wesentlichen rechtseckige Form aufweisen.

Mit einer im Wesentlichen rechteckigen Form sind im Rahmen der vorliegenden Erfindung solche Formen enthalten, welche vier Kanten umfassen, von denen jeweils zwei über eine Ecke oder eine abgerundete Ecke miteinander verbunden sind. Im Wesentlichen rechteckige Formen sind dem Fachmann als solche bekannt. Rechteckige Formen im Rahmen der vorliegenden Erfindung umfassen auch solche Formen, bei denen jeweils zwei Kanten oder alle vier Kanten über die gleiche Länge verfügen.

Weiterhin ist bevorzugt, dass die Maße (x₁, y₁, z₁) des Spiegelgehäuses (03) vorliegenden mit einer im Wesentlichen rechteckigen Form bezüglich der Richtungen x und y unabhängig voneinander 200 bis 250 mm (x₁) auf 400 bis 500 mm (y₁) auf 50 bis 70 mm (z₁) betragen.

Es versteht sich von selbst, dass die Dicke des Spiegelgehäuses material- und konstruktionsabhängig ist, beispielsweise davon abhängig, wieviel Platz jeweils für Spiegelfläche und gegebenenfalls Weitwinkel-Kamera und Sendeeinheit benötigt werden und auch von der Art der Befestigung der Verbindungselemente. In der z-Richtung kann das Spiegelgehäuse sowohl abgerundet als auch eckig geformt sein.

In einer weiteren bevorzugten Ausführungsform weisen Spiegelfläche (02) und Spiegelgehäuse (03) in x- und y-Richtung im Wesentlichen eine elliptische oder runde Form auf.

Eine elliptische oder runde Form als solche ist dem Fachmann bekannt.

Des Weiteren ist es bevorzugt, dass im Fall, in dem Spiegelfläche (02) und Spiegelgehäuse (03) in x- und y-Richtung im Wesentlichen eine elliptische oder runde Form aufweisen, die Maße der Hauptachse (x₂) und Nebenachse (y₂) der Ellipse sowie die Dicke des Gehäuses (z₂) unabhängig 150 bis 200 mm (x₂) auf 150 bis 200 mm (y₂) auf 50 bis 70 mm (z₂) betragen.

Dem Fachmann ist bekannt, dass sich Ellipsen mit Hilfe der Länge einer Haupt- und einer Nebenachse beschreiben lassen. Ebenfalls ist es im Rahmen der vorliegenden Erfindung denkbar, dass die Länge der Haupt- und der Nebenachse sehr ähnlich bis hin zu gleich sind, so dass es sich bei der Form um einen Kreis handelt. In der z-Richtung kann das Spiegelgehäuse sowohl abgerundet als auch eckig geformt sein. Eine bevorzugte Ausführungsform der vorliegenden Erfindung betrifft einen Lastkraftwagen umfassend einen erfindungsgemäßen Notfallspiegel.

Im Rahmen der vorliegenden Erfindung umfasst der Begriff Lastkraftwagen jeden beliebigen dem Fachmann bekannten Lastkraftwagen mit jedem beliebigen dem Fachmann bekannten Antrieb.

Eine weitere bevorzugte Ausführungsform der vorliegenden Erfindung betrifft ein Personenkraftfahrzeug umfassend einen erfindungsgemäßen Notfallspiegel.

Im Rahmen der vorliegenden Erfindung umfasst der Begriff Personenkraftfahrzeug jedes beliebige dem Fachmann bekannte Personenkraftfahrzeug mit jedem beliebigen dem Fachmann bekannten Antrieb.

Erfindungsgemäß ist es weiterhin bevorzugt, dass der erfindungsgemäße Notfallspiegel, enthaltend eine Weitwinkel-Kamera mit Sendeinheit ebenfalls ein mobiles Gerät mit Display mit Empfangseinheit umfasst.

Solche mobilen Geräte mit Display und Empfangseinheit sind dem Fachmann bekannt.

Ohne die Erfindung darauf einzuschränken, kann es sich dem mobilen Gerät mit Display und Empfangseinheit um ein Mobiltelefon oder ein Tablet handeln. Der Vorteil eines solchen mobilen Geräts mit Display und Empfangseinheit ist, dass es im Inneren des Kraftfahrzeugs im Sichtfeld des Fahrers angeordnet werden kann, so dass der rückwärtige Verkehr im Inneren des Kraftfahrzeugs auf dem Display des mobilen Gerätes beobachtet werden kann.

### Bezugszeichenliste

- 01: Notfallspiegel
- 02: Spiegelfläche
- 03: Spiegelgehäuse
- 04: Erstes Verbindungselement
- 05: Zweites Verbindungselement
- 06: Drittes Verbindungselement
- 07: Erstes Halterungselement
- 08: Zweites Halterungselement
- 09: Drittes Halterungselement
- 10: Kamera, digital mit Sendeeinheit

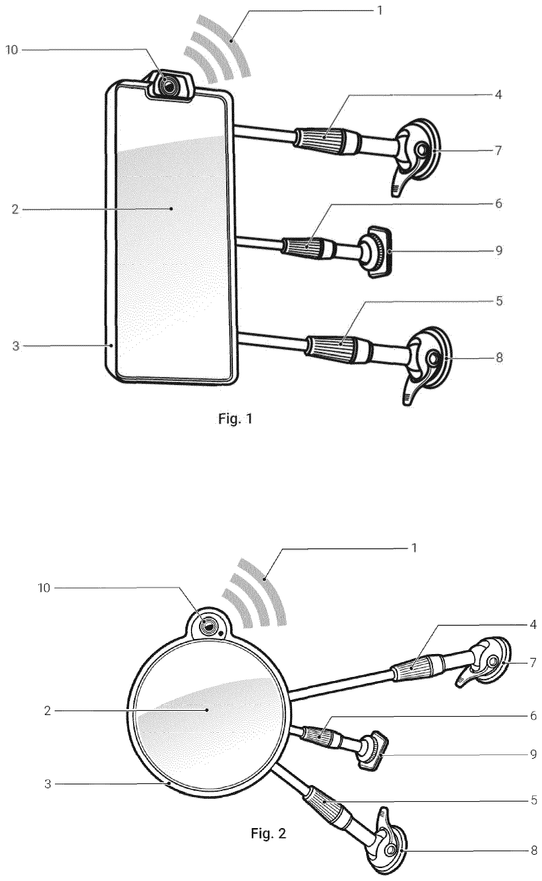

- Figur 1: zeigt eine bevorzugte Ausführungsform der Erfindung bei dem Spiegelfläche (02) und Spiegelgehäuse (03) eine im Wesentlichen rechtseckige Form aufweisen. Figur 1 soll lediglich als Beispiel für eine im Wesentlichen rechteckige Form eines Spiegelgehäuses diesen und die Erfindung in keinem Fall auf solche im Wesentlichen rechteckigen Formen beschränken, bei denen jeweils mindestens die Längen von zwei gegenüberliegenden Kanten des Spiegelgehäuses gleich lang sind.
- Figur 2: zeigt eine bevorzugte Ausführungsform der Erfindung bei dem bei dem Spiegelfläche (02) und Spiegelgehäuse (03) im Wesentlichen eine elliptische oder runde Form aufweisen. Figur 2 soll lediglich als Beispiel für eine im Wesentlichen elliptische oder runde Form eines Spiegelgehäuses diesen und die Erfindung in keinem Fall auf solche im Wesentlichen elliptische oder runde Formen beschränken, bei denen das Spiegelgehäuse im Wesentlichen eine Runde Form aufweisen.

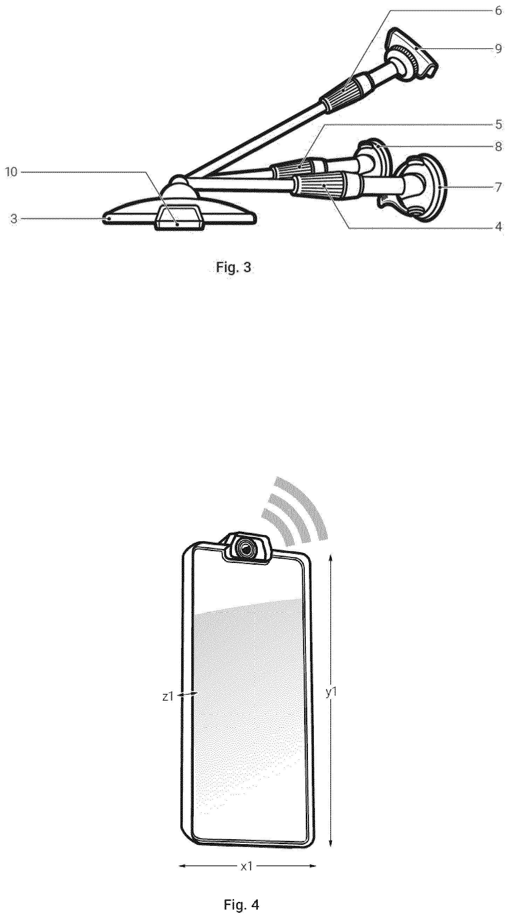

- Figur 3: zeigt exemplarisch das Schwenken eines erfindungsgemäßen Notfallspiegels (01) über die beweglichen Kugelgelenke der Verbindungselemente (04, 05, 06).
- Figur 4: zeigt exemplarisch das Aussehen eines erfindungsgemäßen Notfallspiegels (01), bei dem Spiegelfläche (02) und Spiegelgehäuse (03) eine im Wesentlichen rechtseckige Form aufweisen. x₁ und y₁ beziehen sich hierbei auf die Kantenlängen für den Fall, dass jeweils mindestens die Längen von zwei gegenüberliegenden Kanten des Spiegelgehäuses gleich lang sind. z₁ bezieht sich auf die Dicke des Spiegelgehäuses.

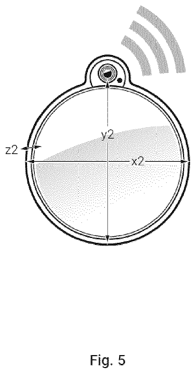

- Figur 5: zeigt exemplarisch das Aussehen eines erfindungsgemäßen Notfallspiegels (01), bei dem Spiegelfläche (02) und Spiegelgehäuse (03) in x- und y-Richtung im Wesentlichen eine elliptische oder runde Form aufweisen. x₂ und y₂ beziehen sich hierbei auf die Maße der Hauptachse (x₂) und Nebenachse (y₂) der Ellipse. z₂ bezieht sich auf die Dicke des Spiegelgehäuses.

## Patentansprüche

1. Notfallspiegel (01) zur lösbaren Montage an einem Kraftfahrzeug umfassend eine Spiegelfläche (02), die in einem Spiegelgehäuse (03) angeordnet ist, wobei mit dem Spiegelgehäuse (03) mindestens drei Verbindungselemente (04, 05, 06) verbunden sind, wobei mindestens ein Verbindungselement (04, 05, 06) längenveränderlich ist, wobei an den dem Spiegelgehäuse (03) abgewandten Enden der Verbindungselemente (04, 05, 06) jeweils ein Halterungselement (07, 08, 09) angeordnet ist, wobei das erste Halterungselement (07) als Saugnapfhalterung ausgestaltet ist und das zweite Halterungselement (08) als Saugnapfhalterung ausgestaltet ist und das dritte Halterungselement (09) als eine U-Profil-Halterung ausgestaltet ist, wobei die Halterungselemente (07, 08, 09) jeweils dafür vorgesehen sind, mit einem Teil einer Tür eines Kraftfahrzeugs eine lösbare Verbindung einzugehen, **dadurch gekennzeichnet, dass** die Verbindungselemente (04, 05, 06) mittels Kugelgelenk mindestens um 150° schwenkbar sind und wobei das Spiegelgehäuse (03) eine digitale Weitwinkel-Kamera (10) mit Sendeeinheit umfasst, wobei die Linse der Kamera in dieselbe Richtung wie die Spiegelfläche gerichtet ist.

2. Notfallspiegel (01) gemäß Anspruch 1, wobei mindestens zwei der drei Verbindungselemente (04, 05, 06) längenveränderlich sind.

3. Notfallspiegel (01) gemäß einem der Ansprüche 1 und 2, wobei alle drei Verbindungselemente (04, 05, 06) längenveränderlich sind.

4. Notfallspiegel (01) gemäß der Ansprüche 1 bis 3, wobei die Halterungselemente (07) und (08) als Saugnapfhalterungen ausgestaltet sind und dafür vorgesehen sind, wiederlösbare kraftschlüssige Verbindungen mit der Fensterscheibe einer Tür eines Kraftfahrzeugs eingehen können.

5. Notfallspiegel (01) gemäß einem der Ansprüche 1 bis 4, wobei das Halterungselement (09) als U-Profil-Halterung ausgestaltet ist und dafür vorgesehen ist, eine wiederlösbare formschlüssige Verbindung zwischen der A-Säule eines Kraftfahrzeugs und einer Tür eines Kraftfahrzeugs einzugehen.

6. Notfallspiegel (01) gemäß einem der Ansprüche 1 bis 5, wobei Spiegelfläche (02) und Spiegelgehäuse (03) eine im Wesentlichen rechtseckige Form aufweisen.

7. Notfallspiegel (01) gemäß Anspruch 6, wobei die Maße (x₁, y₁, z₁) des Spiegelgehäuses (03) unabhängig voneinander 200 bis 250 mm (x₁) auf 400 bis 500 mm (y₁) auf 50 bis 70 mm (z₁) betragen.

8. Notfallspiegel (01) gemäß einem der Ansprüche 1 bis 5, wobei Spiegelfläche (02) und Spiegelgehäuse (03) im Wesentlichen eine elliptische oder runde Form aufweisen.

9. Notfallspiegel (01) gemäß Anspruch 8, wobei die Maße der Hauptachse (x₂) und Nebenachse (y₂) der Ellipse sowie die Dicke des Gehäuses (z₂) unabhängig 150 bis 200 mm (x₂) auf 150 bis 200 mm (y₂) auf 50 bis 70 mm (z₂) betragen.

10. Lastkraftwagen, umfassend einen Notfallspiegel gemäß einem der Ansprüche 1 bis 9.

11. Personenkraftwagen, umfassend einen Notfallspiegel gemäß einem der Ansprüche 1 bis 9.

12. Vorrichtung, umfassend ein mobiles Gerät mit Display mit Empfangseinheit und einen Notfallspiegel gemäß Anspruch 5.

## Claims

1. Emergency mirror (01) for releasable mounting on a motor vehicle, comprising a mirror surface (02) which is arranged in a mirror housing (03), wherein at least three connecting elements (04, 05, 06) are connected to the mirror housing (03), wherein at least one connecting element (04, 05, 06) is variable in length, wherein a respective holding element (07, 08, 09) is arranged at the ends of the connecting elements (04, 05, 06) facing away from the mirror housing (03), wherein the first holding element (07) is designed as a suction cup holder and the second holding element (08) is designed as a suction cup holder and the third holding element (09) is designed as a U-profile holder, wherein the holding elements (07, 08, 09) are each provided for the purpose to form a releasable connection with a part of a door of a motor vehicle, **characterized in that** the connecting elements (04, 05, 06) can be swiveled by at least 150° by means of a ball joint, and wherein the mirror housing (03) comprises a digital wide-angle camera (10) with a transmitting unit, the lens of the camera being directed in the same direction as the mirror surface.

2. Emergency mirror (01) according to claim 1, wherein at least two of the three connecting elements (04, 05, 06) are variable in length.

3. Emergency mirror (01) according to claim 1 or 2, wherein all three connecting elements (04, 05, 06) are variable in length.

4. Emergency mirror (01) according to any of claims 1 to 3, wherein the holding elements (07) and (08) are designed as suction cup holders and are intended to be able to form releasable non-positive connections with the window pane of a door of a motor vehicle.

5. Emergency mirror (01) according to any of claims 1 to 4, wherein the holding element (09) is designed as a U-profile holder and is intended to form a releasable positive connection between the A-pillar of a motor vehicle and a door of a motor vehicle.

6. Emergency mirror (01) according to any of claims 1 to 5, wherein the mirror surface (02) and the mirror housing (03) have a substantially right-angled shape.

7. Emergency mirror (01) according to claim 6, wherein the dimensions (x₁, y₁, z₁) of the mirror housing (03) independently of one another are 200 to 250 mm (x₁) to 400 to 500 mm (y₁) to 50 to 70 mm (z₁).

8. Emergency mirror (01) according to any of claims 1 to 5, wherein the mirror surface (02) and the mirror housing (03) have a substantially elliptical or round shape.

9. Emergency mirror (01) according to claim 8, wherein the dimensions of the major axis (x₂) and minor axis (y₂) of the ellipse as well as the thickness of the housing (z₂) are independently 150 to 200 mm (x₂) to 150 to 200 mm (y₂) to 50 to 70 mm (Z₂).

10. Truck comprising an emergency mirror according to any of claims 1 to 9.

11. Passenger car comprising an emergency mirror according to any of claims 1 to 9.

12. Apparatus comprising a mobile device having a display with a receiving unit and an emergency mirror according to claim 5.

## Revendications

1. Rétroviseur de secours (01) destiné à être monté de manière réversible sur un véhicule automobile, comprenant une surface de miroir (02) qui est disposée dans un boîtier de rétroviseur (03), au moins trois éléments de liaison (04, 05, 06) étant reliés au boîtier de rétroviseur (03), au moins un élément de liaison (04, 05, 06) étant de longueur variable, un élément de support (07, 08, 09) étant disposé à chacune des extrémités des éléments de liaison (04, 05, 06) opposées au boîtier de rétroviseur (03), le premier élément de support (07) étant conçu comme un support à ventouse et le deuxième élément de support (08) étant conçu comme un support à ventouse et le troisième élément de support (09) étant conçu comme un support profilé en U, les éléments de support (07, 08, 09) étant prévus chacun pour entrer en liaison réversible avec une partie d'une porte d'un véhicule automobile, **caractérisé en ce que** les éléments de liaison (04, 05, 06) peuvent pivoter d'au moins 150° au moyen d'une articulation sphérique et dans lequel le boîtier de rétroviseur (03) comprend une caméra numérique grand angle (10) avec une unité d'émission, la lentille de la caméra étant dirigée dans la même direction que la surface du rétroviseur.

2. Rétroviseur de secours (01) selon la revendication 1, dans lequel au moins deux des trois éléments de liaison (04, 05, 06) sont de longueur variable.

3. Rétroviseur de secours (01) selon l'une des revendications 1 et 2, dans lequel les trois éléments de liaison (04, 05, 06) sont de longueur variable.

4. Rétroviseur de secours (01) selon les revendications 1 à 3, dans lequel les éléments de support (07) et (08) sont conçus comme des supports à ventouse et sont prévus pour pouvoir former des liaisons par adhérence réversibles avec la vitre d'une portière d'un véhicule automobile.

5. Rétroviseur de secours (01) selon l'une des revendications 1 à 4, dans lequel l'élément de support (09) est réalisé sous la forme d'un support profilé en U et est prévu pour établir une liaison par complémentarité de forme réversible entre le montant A d'un véhicule automobile et une porte d'un véhicule automobile.

6. Rétroviseur de secours (01) selon l'une quelconque des revendications 1 à 5, dans lequel la surface de miroir (02) et le boîtier de rétroviseur (03) présentent une forme sensiblement rectangulaire.

7. Rétroviseur de secours (01) selon la revendication 6, dans lequel les dimensions (x₁, y₁, z₁) du boîtier de rétroviseur (03) sont indépendamment les unes des autres de 200 à 250 mm (x₁) sur 400 à 500 mm (y₁) sur 50 à 70 mm (z₁).

8. Rétroviseur de secours (01) selon l'une quelconque des revendications 1 à 5, dans lequel la surface de miroir (02) et le boîtier de rétroviseur (03) ont une forme sensiblement elliptique ou circulaire.

9. Rétroviseur de secours (01) selon la revendication 8, dans lequel les dimensions de l'axe principal (x₂) et de l'axe secondaire (y₂) de l'ellipse ainsi que l'épaisseur du boîtier (z₂) sont indépendamment de 150 à 200 mm (x₂) à 150 à 200 mm (y₂) à 50 à 70 mm (z₂).

10. Camion comprenant un rétroviseur de secours selon l'une quelconque des revendications 1 à 9.

11. Voiture particulière comprenant un rétroviseur d'urgence selon l'une quelconque des revendications 1 à 9.

12. Dispositif comprenant un appareil mobile avec affichage avec unité de réception et un rétroviseur de secours selon la revendication 5.
